# EUROPEAN PATENT SPECIFICATION

(11) **EP 3 414 970 B1**
(45) Date of publication and mention of the grant of the patent: **16.12.2020**
(21) Application number: 16890120.5
(22) Date of filing: 28.12.2016
(51) Int. Cl.: H04W 76/18, H04W 36/00

(54) **DEVICES FOR RRC CONNECTION RE-ESTABLISHMENT**
VORRICHTUNGEN ZUR RRC-VERBINDUNGSWIEDERHERSTELLUNG
DISPOSITIFS POUR LE RÉTABLISSEMENT D'UNE CONNEXION RRC

(30) Priority: 09.02.2016 US 201662293281 P
(43) Date of publication of application: 19.12.2018
(73) Proprietor: Intel IP Corporation, Santa Clara, CA 95054 (US)
(72) Inventor: HEO, Youn Hyoung, Sunnyvale, CA 94087-4068 (US); LIM, Seau S., Swindon SN1 4GU (GB)
(74) Representative: Wardle, Callum Tarn
(86) International application number: PCT/US2016/068867
(87) International publication number: WO 2017/139039

(56) References cited:
- WO-A1-2016/003223
- KR-A- 20150 085 015
- US-A1- 2013 003 533
- US-A1- 2015 201 449
- US-A1- 2015 264 738
- US-A1- 2016 007 378

## Description

### TECHNICAL FIELD

Embodiments pertain to a computer-readable medium and component devices for wireless communications, and particularly to systems and methods for long term evolution (LTE), LTE-advanced, and other similar wireless communication systems operating in unlicensed spectrum, and in particular, to radio resource control (RRC) connection reestablishment in such systems.

### BACKGROUND

LTE and LTE-advanced are standards for wireless communication of high-speed data for user equipment (UE) such as mobile telephones. In standard LTE-advanced and various wireless systems, licensed channels are used where unexpected conflicting channel use is rare. LTE cellular communications historically operate with a centrally managed system designed to operate in a licensed spectrum for efficient resource usage. Operating with such centrally managed use within unlicensed channels where systems not centrally controlled that use different channel access mechanisms than legacy LTE may be present carries significant risk of direct interference. In unlicensed channels, by contrast, unexpected conflicting channel use is expected and must be planned for. Some LTE license-assisted access (LAA) systems use licensed channels in combination with unlicensed channels to manage system operation. Standalone systems without licensed operations, however, are also possible.

Patent Publication No. US 2015201449 A1 describes an autonomous denial pattern-based operating method to be performed by a terminal in a wireless communication system. The method comprises acquiring an autonomous denial pattern configuration from a network and performing an autonomous denial operation based on the autonomous denial pattern.

### BRIEF DESCRIPTION OF THE DRAWINGS

FIG. 1A is a block diagram of a system including an evolved node B (eNB) and a user equipment (UE) that may operate according to some embodiments described herein.
FIG. IB is a block diagram showing additional aspects of the system of FIG. 1A, including multiple UEs along with an eNB and an eNB for standalone unlicensed LTE operation (e.g., Multefire™ (MF) eNB) that may operate according to some embodiments described herein.
FIG. 2 illustrates aspects of an MF communication system according to some example embodiments.
FIG. 3 illustrates aspects of a MF communication system according to some example embodiments.
FIG. 4 illustrates aspects of a MF communication system according to some example embodiments.
FIG. 5 is a flowchart illustrating a method of RRC connection reestablishment in MF systems according to some example embodiments.
FIG. 6 is a flowchart illustrating a method of RRC connection reestablishment in MF systems, according to some example embodiments.
FIG. 7 illustrates aspects of a UE, in accordance with some example embodiments.
FIG. 8 is a block diagram, illustrating an example computer system machine, which may be used in association with various embodiments described herein.
FIG. 9 is a block diagram illustrating an example UE, including aspects of wireless communication systems, which may be used in association with various embodiments described herein.

### DETAILED DESCRIPTION

Embodiments relate to devices, and computer-readabler medium to enhance wireless communications, and particularly to enhance communication systems that operate with carrier aggregation and license-assisted access. The following description and the drawings illustrate specific embodiments to enable those skilled in the art to practice them. Other embodiments can incorporate structural, logical, electrical, process, and other changes.

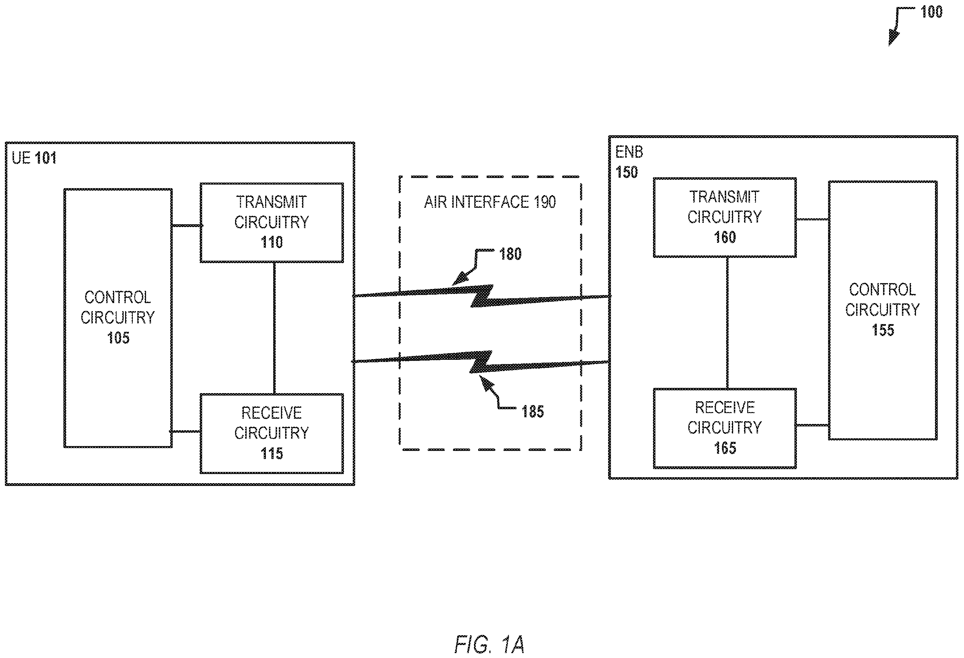

FIG. 1A illustrates aspects of a wireless network system 100, in accordance with some embodiments. The wireless network system 100 includes a UE 101 and an eNB 150 connected via an air interface 190. UE 101 and eNB 150 communicate using a system that supports carrier aggregation and the use of unlicensed frequency bands, such that the air interface 190 supports multiple component carriers on different frequencies using licensed as well as unlicensed bands. A component carrier 180 and a component carrier 185 are illustrated. Although two component carriers are illustrated, various embodiments may include any number of two or more component carriers. Various embodiments may function with any number of licensed channels and any number of unlicensed channels.

Additionally, in various embodiments described herein, at least one of the component carriers 180, 185 of the air interface 190 comprises a carrier operating in an unlicensed frequency, referred to herein as an unlicensed carrier. An "unlicensed carrier" or "unlicensed frequency" refers to a range of radio frequencies that are not exclusively set aside for the use of the system. Some frequency ranges, for example, may be used by communication systems operating under different communication standards, such as a frequency band that is used by both Institute of Electronic and Electrical Engineers (IEEE) 802.11 standards (e.g., "WiFi") and Third Generation Partnership Project (3GPP) standards. By contrast, a licensed channel or licensed spectrum operates under a particular standard, with limited concern that other unexpected signals operating under different standards will be present.

Apart from the LAA operation considered in Release 13 of the 3GPP standard (3GPP release 13, open as of September 30, 2012), LTE may also be operated via dual connectivity or a standalone LTE mode which may use little or no assistance from the licensed spectrum. Recently, a new LTE-based technology, "MuLTEfire", has been under consideration, requiring no assistance from the licensed spectrum to enable a leaner, self-contained network architecture that is suitable for neutral deployments where any deployment can service any device. The operation of LTE on the unlicensed spectrum without any assistance from a licensed carrier will be referred to as standalone LTE unlicensed (LTE-U) or MuLTEfire herein.

As discussed below, when a system operates in an unlicensed spectrum, rules and operations for verifying that the unlicensed channels are available provide additional overhead and system operational elements that are not present in licensed channels. The sharing of a channel may be referred to as "fair coexistence", where different systems operate to use an unlicensed or shared channel while limiting both interference and direct integration with the other systems operating under different standards.

Embodiments described herein for coexistence may operate within the wireless network system 100. In the wireless network system 100, the UE 101 and any other UE in the system may be, for example, laptop computers, smartphones, tablet computers, printers, machine-type devices such as smart meters or specialized devices for healthcare monitoring, remote security surveillance systems, intelligent transportation systems, or any other wireless devices with or without a user interface. The eNB 150 provides the UE 101 network connectivity to a broader network (not shown). This UE 101 connectivity is provided via the air interface 190 in an eNB service area provided by the eNB 150. In some embodiments, such a broader network may be a wide area network (WAN) operated by a cellular network provider, or may be the Internet. Each eNB service area associated with the eNB 150 is supported by antennas integrated with the eNB 150. The service areas are divided into a number of sectors, each associated with certain antennas. Such sectors may be physically associated with fixed antennas or may be assigned to a physical area, with tunable antennas or antenna settings adjustable in a beamforming process used to direct a signal to a particular sector. One embodiment of the eNB 150, for example, includes three sectors, each covering a 120-degree area, with an array of antennas directed to each sector to provide 360-degree coverage around the eNB 150.

The UE 101 includes control circuitry 105 coupled with transmit circuitry 110 and receive circuitry 115. The transmit circuitry 110 and receive circuitry 115 may each be coupled with one or more antennas. The control circuitry 105 may be adapted to perform operations associated with wireless communications using carrier aggregation. The transmit circuitry 110 and receive circuitry 115 may be adapted to transmit and receive data, respectively. The control circuitry 105 may be adapted or configured to perform various operations such as those described elsewhere in this disclosure related to a UE. The transmit circuitry 110 may transmit a plurality of multiplexed uplink physical channels. The plurality of uplink physical channels may be multiplexed according to time division multiplexing (TDM) or frequency division multiplexing (FDM) along with carrier aggregation. The transmit circuitry 110 may be configured to receive block data from the control circuitry 105 for transmission across the air interface 190. Similarly, the receive circuitry 115 may receive a plurality of multiplexed downlink physical channels from the air interface 190 and relay the physical channels to the control circuitry 105. The uplink and downlink physical channels may be multiplexed according to FDM. The transmit circuitry 110 and the receive circuitry 115 may transmit and receive both control data and content data (e.g., messages, images, video, et cetera) structured within data blocks that are carried by the physical channels.

FIG. 1A also illustrates the eNB 150, in accordance with various embodiments. The eNB 150 circuitry may include control circuitry 155 coupled with transmit circuitry 160 and receive circuitry 165. The transmit circuitry 160 and receive circuitry 165 may each be coupled with one or more antennas that may be used to enable communications via the air interface 190.

The control circuitry 155 may be adapted to perform operations for managing channels and component carriers used with various UEs. The transmit circuitry 160 and receive circuitry 165 may be adapted to transmit and receive data, respectively, to and from any UE connected to the eNB 150. The transmit circuitry 160 may transmit downlink physical channels comprised of a plurality of downlink subframes. The receive circuitry 165 may receive a plurality of uplink physical channels from various UEs including the UE 101. The plurality of uplink physical channels may be multiplexed according to FDM in addition to the use of carrier aggregation.

As mentioned above, the communications across the air interface 190 may use carrier aggregation, where multiple different component carriers 180, 185 can be aggregated to carry information between the UE 101 and the eNB 150 Such component carriers 180, 185 may have different bandwidths, and may be used for uplink communications from the UE 101 to the eNB 150, downlink communications from the eNB 150 to the UE 101, or both Such component carriers 180, 185 may cover similar areas, or may cover different but overlapping sectors. The RRC connection is handled by one of the component carriers, which may be referred to as the primary component carrier, with the other component carriers referred to as secondary component carriers.

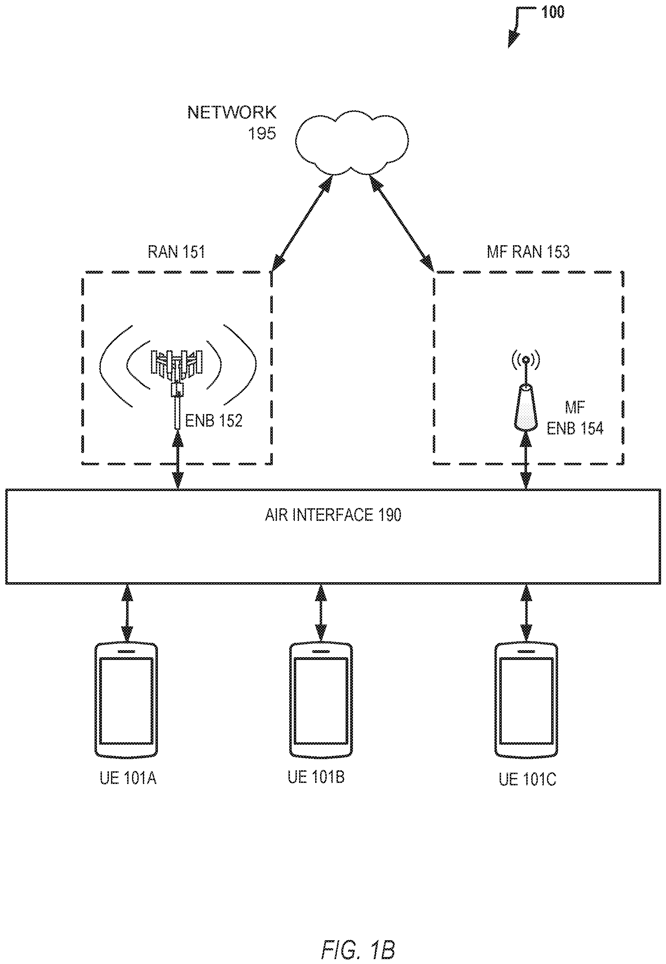

FIG. 1B illustrates additional aspects of the wireless network system 100 of FIG. 1A. As illustrated, the wireless network system 100 may provide multiple UEs 101A, 101B, 101C, and so on with access to a broader network 195 via an air interface 190. The network 195 may be any suitable network, including various WANs or the Internet. This access may be provided via a standard radio area network (RAN) 151 operating using licensed spectrum using the eNB 150 discussed above. Additionally, access may be provided using an MF RAN 153 via an MF eNB 154 using unlicensed spectrum of the air interface 190 In various embodiments, a wireless network system may include multiple eNBs as well as small cells in support of the eNBs.

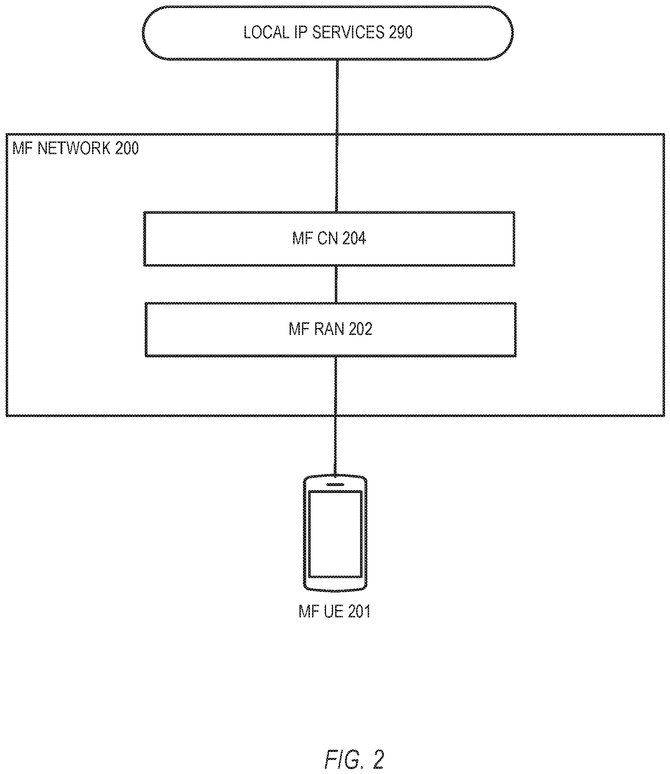

FIGs. 2-4 illustrate aspects of possible MF communication systems, according to some example embodiments. RRC reconnection operations for MF systems may be implemented in any such systems according to various embodiments.

FIG. 2 illustrates a standalone deployment scenario without external interworking. Such a system may be referred to as a system with a neutral host, or a neutral host mode without external networking. FIG. 2 includes an MF network 200 connected to an MF UE 201 and local IP services 290. The MF UE 201 may be any UE configured for communications using unlicensed channels, such as the UE 101 of FIG. 1. The local IP services 290 may include server and routing hardware, as well as connections to a broader network such as a WAN or the Internet. The MF network 200 includes an MF radio area network (MF RAN) 202 as well as an MF core network (MF CN) 204. The MF RAN 202 may be similar to the MF RAN 153, and includes one or more MF eNBs as well as any other such radio hardware for communicating with the MF UE 201. The MF CN 204 includes hardware for managing LTE communications in an unlicensed environment, including managing wireless communications for the MF UE 201 communicating with devices providing the local IP services 290.

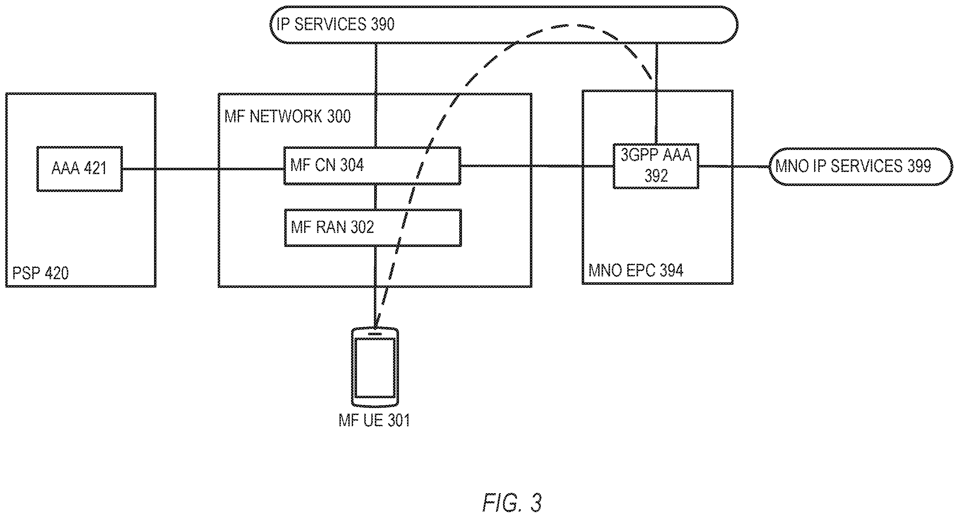

FIG. 3 illustrates a standalone deployment system with external interworking. This may also be referred to as a system with neutral host mode and external interworking. An MF UE 301 of FIG. 3 can be configured to be simultaneously connected to an MF RAN 302 as well as a separate 3GPP connectivity including a 3GPP RAN and/or including a mobile network operator (MNO) evolved packet core (EPC) 394 operating with licensed channels as part of a separate network or integrated with an MF network 300 operation for the MF UE 301. The MNO EPC 394 includes 3GPP Authentication, Authorization, and Accounting (AAA) 392 functionality to provide the MF UE 301 access to the 3GPP network functionality of the MNO EPC 394 and to access MNO IP services 399. In some embodiments, an MF CN 304 may include systems to manage communications with all of the systems for IP services 390, 3GPP AAA 392, and MNO IP sendees. In some embodiments, this access is managed by AAA for the MF network 300 or by an independent AAA 42 1 system operating as part of a PSP 420.

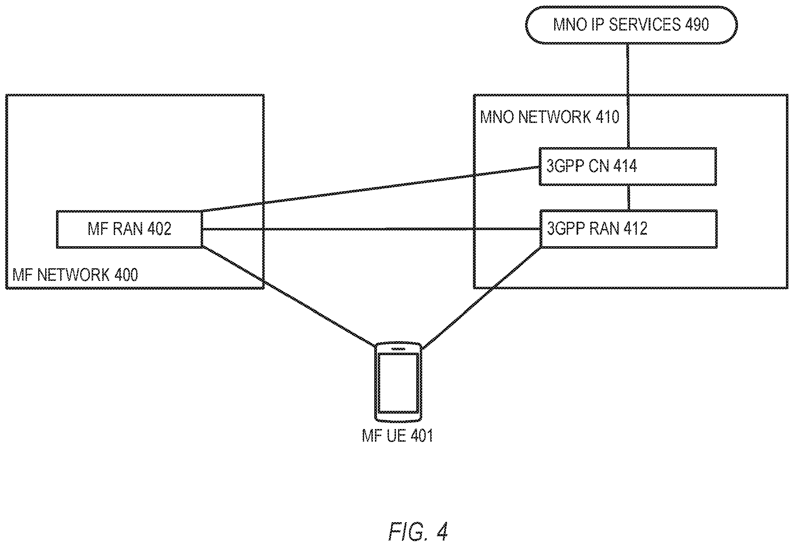

FIG. 4 illustrates aspects of an interworking deployment scenario. In some embodiments, this is referred to as an MF network 400 operating in an evolved packet core (EPC) connected mode. This may be, in some embodiments, similar to the system of FIG. IB. In such an EPC connected mode embodiment, an MF RAN 402 of the MF network 400 is connected to an MNO network 410 through connections to both a 3GPP RAN 412 and a 3GPP core network (CN) 414. In various embodiments, any such connection between the MF network 400 and the MNO network 410 may be configured to allow mobility between the networks. The MF network 400 may operate with the MF RAN 402 but with limited or no separate MF CN, while the 3GPP standard network of the MNO network 410 includes the 3GPP RAN 412 and the 3GPP CN 414 providing access to MNO IP services 490. Such embodiments may essentially allow additional wireless bandwidth to an MF UE 401 by using both licensed bandwidth for the MNO network 410 and unlicensed bandwidth for the MF network 400 while providing shared access to the MNO IP services 490 via the 3GPP CN 414.

For mobility support in MF networks such as the networks described above, in some embodiments the MF network is identified with an MF identity (MF-ID) or Neutral Host Network Identity (NHN-ID). The MF-ID enables mobility support, and in various embodiments replaces a public land mobile network (PLMN) identity. The MF-ID may be considered similar to an SSID in wireless radio area network (WRAN) systems. This means that different MF identities can be configured for an MF network served by the same operator if an MF network is deployed in different areas and/or if an MF network is deployed with different service options. Additionally, an MF identity may be used to identify MF networks served by different MF network operators.

Embodiments described herein include one or both of the following two approaches to RRC connection reestablishment procedures. In a first approach, RRC connection reestablishment is supported if the selected service cell (e.g., MF eNB) belongs to the same MF network as the eNB associated with a previous RRC connection (e.g., if the old and new eNBs share an MF-ID or have related MF-IDs). In approach two, the UE sends an MF-ID from the dropped RRC connection in the RRC connection reestablishment request to a new eNB. Such embodiments use identifiers in a way not known in standard LTE systems. In standard LTE, there is no need to identify the LTE network in such a fashion since the network operates in licensed spectrum where the operator ensures that the physical cell identity (PCID) is not reused in limited geographical areas, such that the PCID can be used to identify the cell that a UE is moving to. By contrast, because MF networks operate in unlicensed spectrum, a PCID may not uniquely identify a cell a UE has moved to. Therefore, MF network operations have a need for further cell identification. Otherwise, upon RRC connection reestablishment, the UE may end up in a different network with a different MF-ID, which causes operation errors.

In various embodiments, connected mode mobility is supported within the same MF network, but may not be supported between different MF networks. Embodiments herein address problems created in LTE RRC reconnection operations by this lack of mobility support between MF networks.

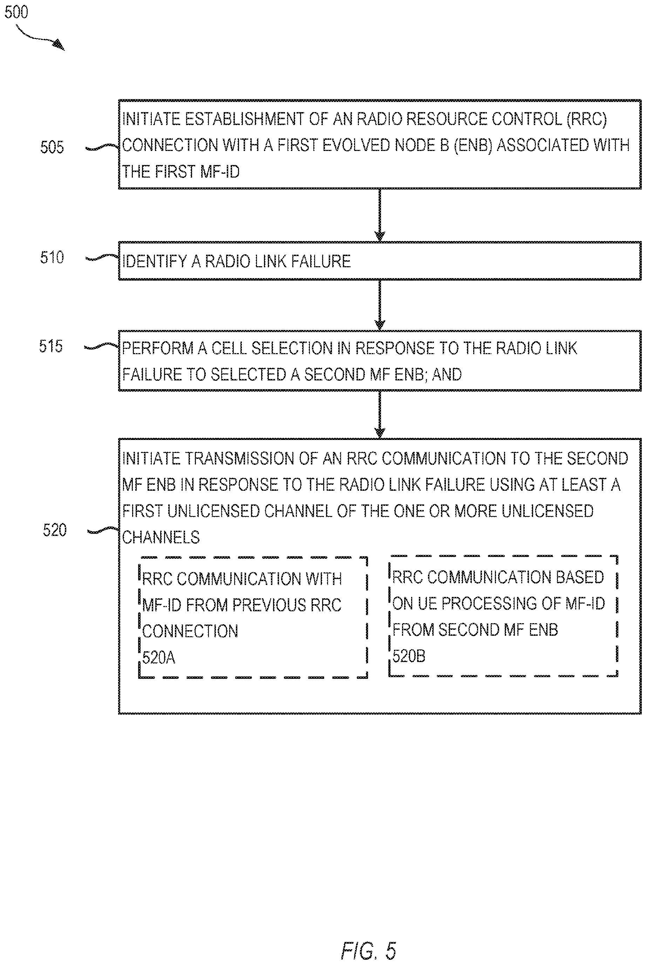

FIG. 5 then illustrates an example method 500 that operates according to one embodiment. The method 500 is performed by a UE or an apparatus (e.g., an integrated circuit, electronic module, or other components) of the UE having one or more processors and a memory. In various other embodiments, circuitry of the device may be configured to implement operations corresponding to the operations of the method 500, or instructions stored in the memory of the device may configure the circuitry of the device to perform such operations as the device is configured for standalone communications between a UE and an eNB using unlicensed spectrum (e.g., MF communications).

The method 500 begins with operation 505, where circuitry of the UE initiates establishment of a radio resource control (RRC) connection with a first evolved node B (eNB) associated with a first MF-ID.

A radio link failure is then identified by the circuitry in operation 510. Following the radio link failure, in operation 515, the circuitry performs a cell selection in response to the radio link failure to select a second MF eNB. As part of a suitability check during cell selection, the UE will decode a system information block (SIB, MIB, or eSIB) and identify the cell that it is to reestablish the prior RRC connection with. Decoding the SIB allows the UE to find an MF-ID encoded in the SIB. Embodiments described herein thus include an eNB transmitting an SIB that includes an MF-ID for the eNB or the MF network the eNB is associated with. In some embodiments, the UE may prioritize the cells belonging to the same MF network after identifying one or more MF-IDs. In some embodiments, if such prioritization is not supported or if there is no suitable cell having a same MF-ID as the previous RRC connection, the UE may select a cell from another MF network.

In operation 520, the circuitry initiates transmission of an RRC communication to the second MF eNB in response to the radio link failure using at least a first unlicensed channel of the one or more unlicensed channels. The two different approaches discussed above may either or both be included as part of the method 500. In one embodiment, operation 520A proceeds, with the RRC communication including the MF-ID from the previous RRC connection that the UE is seeking to reestablish. In another embodiment, operation 520B includes an RRC communication that is based on the UE having processed an MF-ID (e.g., from the SIB) from the new MF eNB the UE is attempting to reestablish the RRC connection with. In various embodiments, an MF eNB is configured to perform operations corresponding to the UE operations of the method 500.

In one embodiment of the first approach, the UE sends an RRC connection reestablishment request to the MF RAN on the same MF network or a related MF network which is connected as part of a serving MF network via an X2 or S1 connection (e.g., related MF networks or MF RANs that are owned or operated by the same host or operator) . Such an operation assumes that the UE can identify these networks via the MF-ID of the network. Otherwise, if the UE cannot find a cell with the shared MF-ID or an MF-ID that is known to be related to the MF-ID for the original RRC connection, then the UE goes into an idle mode. In some embodiments, the UE then only establishes a new RRC connection to perform non-access stratum (NAS) recovery or CN-level recovery. This can be for MF networks owned by the same operator/host or for MF networks owned by a different operator/host. In some embodiments, in EPC mode, NAS recovery involves an NAS service request or tracking area update.

In one embodiment of the second approach, the UE sends an RRC connection reestablishment request to any MF RAN that the UE selects in a cell selection operation. The UE then generates a connection reestablishment request message to the selected cell. In the request message, the UE includes the MF-ID and a PCI-ID in the RRC connection reestablishment request to the selected MF RAN cell. If the contacted eNB of the MF RAN is unable to perform the reestablishment (e.g., if the MF-ID is not recognized or the corresponding MF network is not connected with the serving MF network), the MF RAN rejects the reestablishment request from the UE. If the MF RAN can perform the reestablishment (e.g., the MF RAN can bring the UE context from the old MF-RAN), the new MF RAN will inform the UE of the success. In some embodiments, in the MF-ID and PCI ID provided together in the reestablishment request, the PCI ID may collide with the MF RAN, and a new request format or process to manage the collision may be used. In some embodiments, the MF-ID is a series of up to 32 octets for naming the MF network.

In various embodiments, in order to introduce the MF-ID, a new RRC connection reestablishment request message is generated in a format other than the 3GPP standard message format, since few extensions are allowed except using 2 bits of spare values in the 3GPP standard message format.

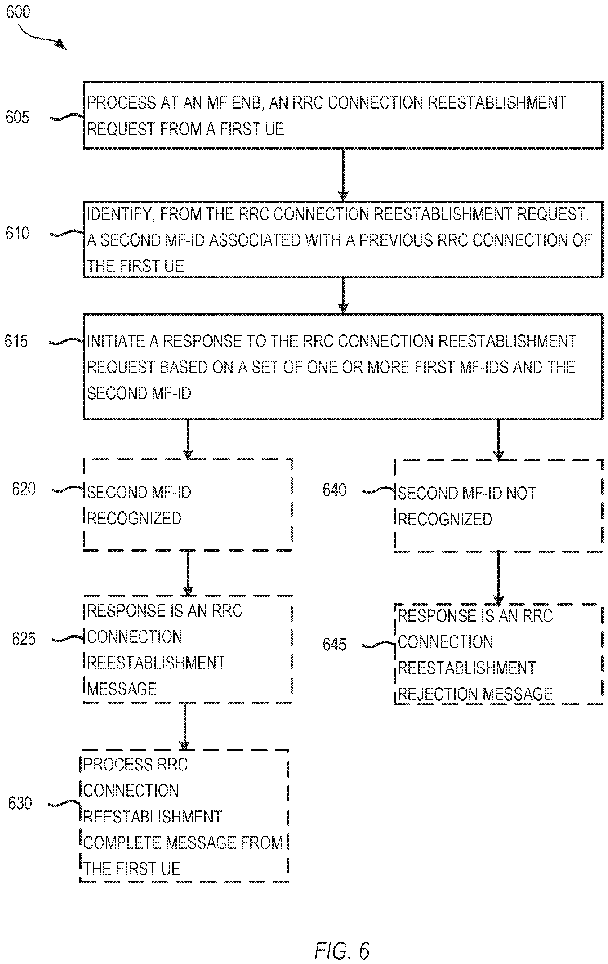

FIG. 6 then illustrates an example method 600 that operates according to one embodiment. The method 600 is performed by an eNB or an apparatus (e.g., an integrated circuit, electronic module, or other components) of the eNB having one or more processors and a memory. In various other embodiments, circuitry of the device may be configured to implement operations corresponding to the operations of the method 600, or instructions stored in the memory of the device may configure the circuitry of the device to perform such operations as the device is configured for MF communications between a UE and an eNB.

The method 600 begins with circuitry of an eNB processing an RRC connection reestablishment request from a first UE in operation 605. In operation 610, a second MF-ID associated with a previous RRC connection of the first UE is identified.

In operation 615, a response to the RRC connection reestablishment request is initiated based on a determination of whether the second MF-ID received from the UE is associated with the eNB processing the request. In some embodiments, this involves determining if the second MF-ID is in a set of one or more MF-IDs stored at the eNB. In other embodiments, any other such process may be used to determine if the MF-ID is associated with the MF network that the processing eNB is part of.

If the second MF-ID is recognized in operation 620, then in operation 625 the eNB responds with an RRC connection reestablishment message. The first UE then receives this message and responds with an RRC connection reestablishment complete message that is received at the eNB and processed in operation 630.

If the second MF-ID is not recognized in operation 640, then in operation 645, the eNB sends an RRC connection reestablishment rejection message.

### EXAMPLE SYSTEMS AMD DEVICES

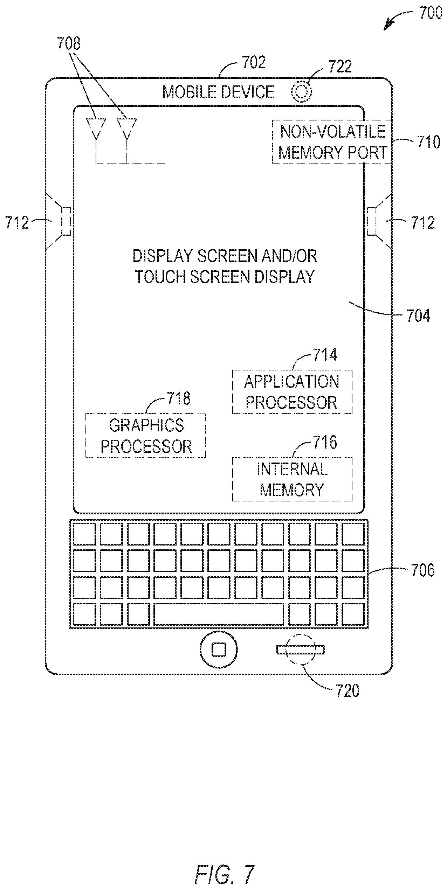

FIG. 7 shows an example UE, illustrated as a UE 700. The UE 700 may be an implementation of the UE 101, or any device described herein. The UE 700 can include one or more antennas 708 configured to communicate with a transmission station, such as a base station (BS), an eNB, or another type of wireless wide area network (WWAN) access point. The UE 700 can be configured to communicate using at least one wireless communication standard including 3GPP LTE, WiMAX, High Speed Packet Access (HSPA), Bluetooth, and WiFi. The UE 700 can communicate using separate antennas for each wireless communication standard or shared antennas for multiple wireless communication standards. The UE 700 can communicate in a wireless local area network (WLAN), a wireless personal area network (WPAN), and/or a WAN.

FIG. 7 also shows a microphone 720 and one or more speakers 712 that can be used for audio input and output to and from the UE 700. A display screen 704 can be a liquid crystal display (LCD) screen, or another type of display screen such as an organic light emitting diode (OLED) display. The display screen 704 can be configured as a touch screen. The touch screen can use capacitive, resistive, or another type of touch-screen technology. An application processor 714 and a graphics processor 718 can be coupled to an internal memory 716 to provide processing and display capabilities. A non-volatile memory port 710 can also be used to provide data I/O options to a user. The non-volatile memory port 710 can also be used to expand the memory capabilities of the UE 700. A keyboard 706 can be integrated with the UE 700 or wirelessly connected to the UE 700 to provide additional user input. A virtual keyboard can also be provided using the touch screen. A camera 722 located on the front (display screen) side or the rear side of the UE 700 can also be integrated into a housing 702 of the UE 700.

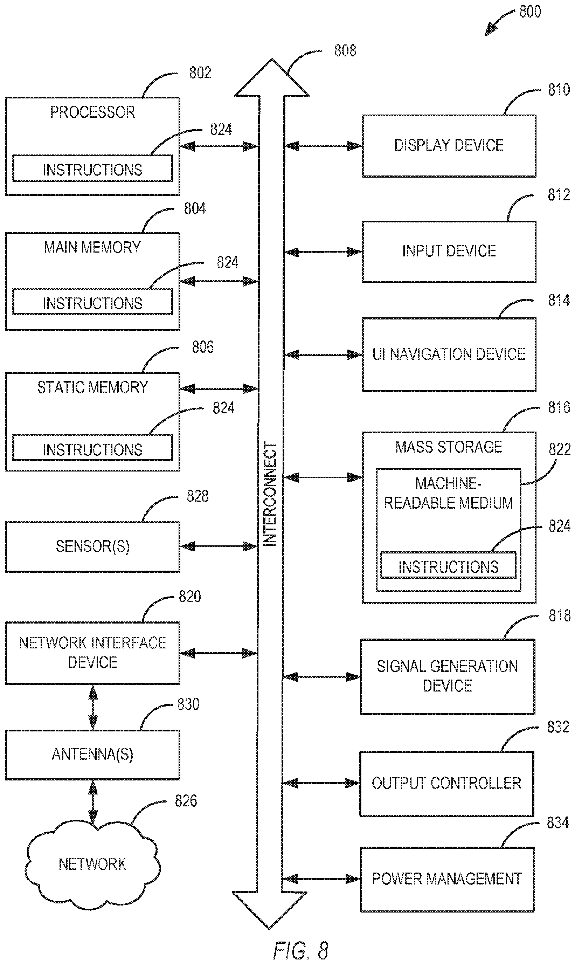

FIG. 8 is a block diagram illustrating an example computer system machine 800 upon which any one or more of the methodologies herein discussed can be run, and which may be used to implement the eNB 150, the UE 101, or any other device described herein. In various alternative embodiments, the machine operates as a standalone device or can be connected (e.g., networked) to other machines. In a networked deployment, the machine can operate in the capacity of either a server or a client machine in server-client network environments, or it can act as a peer machine in peer-to-peer (or distributed) network environments. The machine can be a personal computer (PC) that may or may not be portable (e.g., a notebook or a netbook), a tablet, a set-top box (STB), a gaining console, a Personal Digital Assistant (PDA), a mobile telephone or smartphone, a web appliance, a network router, a network switch, a network bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system machine 800 includes a processor 802 (e.g., a central processing unit (CPU), a graphics processing unit (GPU), or both), a main memory 804, and a static memory 806, which communicate with each other via an interconnect 808 (e.g., a link, a bus, etc.). The computer system machine 800 can further include a video display device 810, an alphanumeric input device 812 (e.g., a keyboard), and a user interface (UI) navigation device 814 (e.g., a mouse). In one embodiment, the video display device 810, alphanumeric input device 812, and UI navigation device 814 are a touch-screen display. The computer system machine 800 can additionally include a mass storage device 816 (e.g., a drive unit), a signal generation device 818 (e.g., a speaker), an output controller 832, a power management controller 834, a network interface device 820 (which can include or operably communicate with one or more antennas 830, transceivers, or other wireless communications hardware), and one or more sensors 828, such as a Global Positioning System (GPS) sensor, compass, location sensor, accelerometer, or other sensor.

The mass storage device 816 includes a machine-readable medium 822 on which is stored one or more sets of data structures and instructions 824 (e.g., software) embodying or utilized by any one or more of the methodologies or functions described herein. The instructions 824 can also reside, completely or at least partially, within the main memory 804, static memory 806, and/or processor 802 during execution thereof by the computer system machine 800, with the main memory 804, the static memory 806, and the processor 802 also constituting machine-readable media.

While the machine-readable medium 822 is illustrated in an example embodiment to be a single medium, the term "machine-readable medium" can include a single medium or multiple media (e.g., a centralized or distributed database, and/or associated caches and servers) that store the one or more instructions 824. The term "machine-readable medium" shall also be taken to include any tangible medium that is capable of storing, encoding, or carrying instructions for execution by the machine and that cause the machine to perform any one or more of the methodologies of the present disclosure, or that is capable of storing, encoding, or carrying data structures utilized by or associated with such instructions.

The instructions 824 can further be transmitted or received over a communications network 826 using a transmission medium via the network interface device 820 utilizing any one of a number of well-known transfer protocols (e.g., hypertext transfer protocol (HTTP)). The term "transmission medium" shall be taken to include any medium that is capable of storing, encoding, or carrying instructions for execution by the machine, and includes digital or analog communications signals or other intangible media to facilitate communication of such software.

Various techniques, or certain aspects or portions thereof, may take the form of program code (i.e., instructions) embodied in tangible media, such as floppy diskettes, CD-ROMs, hard drives, non-transitory computer-readable storage media, or any other machine-readable storage medium wherein, when the program code is loaded into and executed by a machine, such as a computer, the machine becomes an apparatus for practicing the various techniques. In the case of program code execution on programmable computers, the programmable computer may include a processor, a storage medium readable by the processor (including volatile and non-volatile memory and/or storage elements), at least one input device, and at least one output device. The volatile and non-volatile memory and/or storage elements may be a random-access memory (RAM), Erasable Programmable Read-Only Memory (EPROM), flash drive, optical drive, magnetic hard drive, or other medium for storing electronic data. The base station and mobile station or eNB and UE may also include a transceiver module, a counter module, a processing module, and/or a clock module or timer module. One or more programs that may implement or utilize the various techniques described herein may use an application programming interface (API), reusable controls, and the like. Such programs may be implemented in a high-level procedural or object-oriented programming language to communicate with a computer system. However, the program(s) may be implemented in assembly or machine language, if desired. In any case, the language may be a compiled or interpreted language, and combined with hardware implementations.

Various embodiments may use 3GPP LTE/LTE-A, IEEE 802.11, and Bluetooth communication standards. Various alternative embodiments may use a variety of other WWAN, WLAN, and WPAN protocols and standards in connection with the techniques described herein. These standards include, but are not limited to, other standards from 3GPP (e.g., HSPA+, UMTS), IEEE 802.16 (e.g., 802.16p), or Bluetooth (e.g., Bluetooth 7.0, or like standards defined by the Bluetooth Special Interest Group) standards families. Other applicable network configurations can be included within the scope of the presently described communication networks. It will be understood that communications on such communication networks can be facilitated using any number of personal area networks (PANs), local area networks (LANs), and WANs, using any combination of wired or wireless transmission mediums.

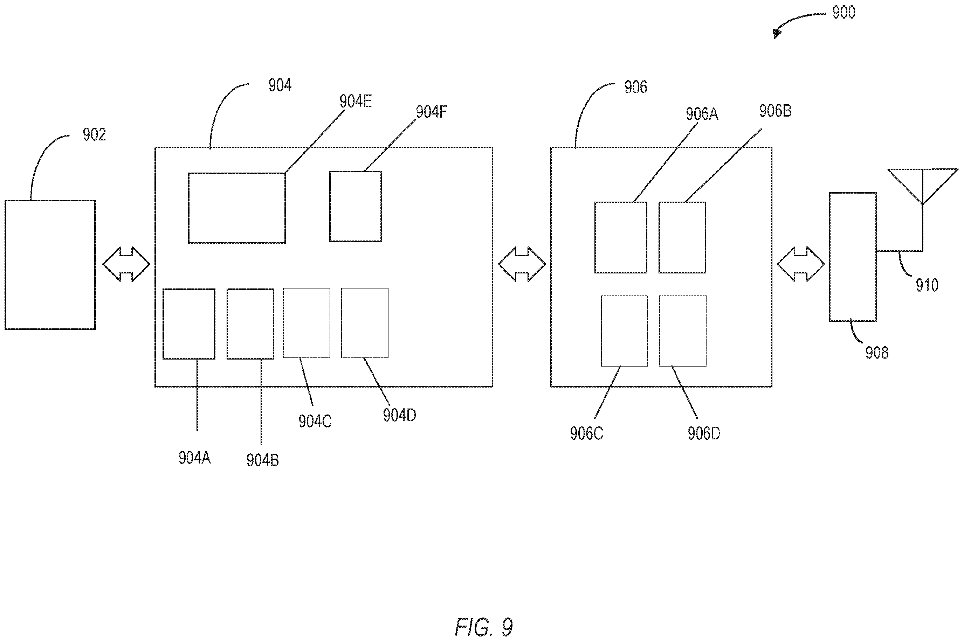

FIG. 9 illustrates, for one embodiment, example components of a UE 900 in accordance with some embodiments. In some embodiments, the UE 900 may include application circuitry 902, baseband circuitry 904, Radio Frequency (RF) circuitry 906, front-end module (FEM) circuitry 908, and one or more antennas 910, coupled together at least as shown. Similarly, various embodiments of eNBs, application servers, or other devices may include similar elements to those described in FIG. 9. In some embodiments, the UE 900 may include additional elements such as, for example, memory/storage, a display, a camera, a sensor, and/or an input/output (I/O) interface.

The application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage, and may be configured to execute instructions stored in the memory/storage to enable various applications and/or operating systems to run on the UE 900.

The baseband circuitry 904 may include circuitry such as, but not limited to, one or more single-core or multi-core processors. The baseband circuitry 904 may include one or more baseband processors and/or control logic to process baseband signals received from a receive signal path of the RF circuitry 906 and to generate baseband signals for a transmit signal path of the RF circuitry 906. The baseband circuitry 904 may interface with the application circuitry 902 for generation and processing of the baseband signals and for controlling operations of the RF circuitry 906. For example, in some embodiments, the baseband circuitry 904 may include a second-generation (2G) baseband processor 904a, third-generation (3G) baseband processor 904b, fourth-generation (4G) baseband processor 904c, and/or other baseband processor(s) 904d for other existing generations, generations in development, or generations to be developed in the future (e.g., fifth generation (5G), 6G, etc.). The baseband circuitry 904 (e.g., one or more of the baseband processors 904a-d) may handle various radio control functions that enable communication with one or more radio networks via the RF circuitry 906. The radio control functions may include, but are not limited to, signal modulation/demodulation, encoding/decoding, radio frequency shifting, etc. In some embodiments, modulation/demodulation circuitry of the baseband circuitry 904 may include Fast-Fourier Transform (FFT), precoding, and/or constellation mapping/demapping functionality. In some embodiments, encoding/decoding circuitry of the baseband circuitry 904 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 904 may include elements of a protocol stack such as, for example, elements of an EUTRAN protocol including, for example, physical (PHY), media access control (MAC), radio link control (RLC), packet data convergence protocol (PDCP), and/or RRC elements. A central processing unit (CPU) 904e of the baseband circuitry- 904 may be configured to run elements of the protocol stack for signaling of the PHY, MAC, RLC, PDCP, and/or RRC layers. In some embodiments, the baseband circuitry 904 may include one or more audio digital signal processors (DSPs) 904f. The audio DSP(s) 904f may include elements for compression/decompression and echo cancellation and may include other suitable processing elements in other embodiments. Components of the baseband circuitry 904 may be suitably combined in a single chip or a single chipset, or disposed on a same circuit board in some embodiments. In some embodiments, some or all of the constituent components of the baseband circuitry 904 and the application circuitry 902 may be implemented together, such as, for example, on a system on a chip (SOC).

In some embodiments, the baseband circuitry 904 may provide for communication compatible with one or more radio technologies. For example, in some embodiments, the baseband circuitry 904 may support communication with an EUTRAN and/or a wireless metropolitan area network (WMAN), a WLAN, or a WPAN. Embodiments in which the baseband circuitry 904 is configured to support radio communications of more than one wireless protocol may be referred to as multi-mode baseband circuitry.

The RF circuitry 906 may enable communication with wireless networks using modulated electromagnetic radiation through a non-solid medium. In various embodiments, the RF circuitry 906 may include switches, filters, amplifiers, et cetera to facilitate the communication with the wireless network. The RF circuitry 906 may include a receive signal path which may include circuitry to down-convert RF signals received from the FEM circuitry 908 and provide baseband signals to the baseband circuitry 904. The RF circuitry 906 may also include a transmit signal path which may include circuitry to up-convert baseband signals provided by the baseband circuitry 904 and provide RF output signals to the FEM circuitry 908 for transmission.

In some embodiments, the RF circuitry 906 may include a receive signal path and a transmit signal path. The receive signal path of the RF circuitry 906 may include mixer circuitry 906a, amplifier circuitry 906b, and filter circuitry 906c. The transmit signal path of the RF circuitry 906 may include the filter circuitry 906c and the mixer circuitry 906a. The RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from the FEM circuitry 908 based on the synthesized frequency provided by the synthesizer circuitry 906d. The amplifier circuitry 906b may be configured to amplify the downconverted signals, and the filter circuitry 906c may be a low-pass filter (LPF) or band-pass filter (BPF) configured to remove unwanted signals from the downconverted signals to generate output baseband signals. Output baseband signals may be provided to the baseband circuitry 904 for further processing. In some embodiments, the output baseband signals may be zero-frequency baseband signals, although this is not a requirement. In some embodiments, the mixer circuitry 906a of the receive signal path may comprise passive mixers, although the scope of the embodiments is not limited in this respect.

In some embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 904 and may be filtered by the filter circuitry 906c. The filter circuitry 906c may include an LPF, although the scope of the embodiments is not limited in this respect.

In some embodiments, the mixer circuitry 906a of the receive signal path and the mixer circuitry 906a of the transmit signal path may include two or more mixers and may be arranged for quadrature down conversion and/or up conversion respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a of the transmit signal path may be arranged for direct down conversion and/or direct up conversion, respectively. In some embodiments, the mixer circuitry 906a of the receive signal path and the mixer circuitry 906a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 904 may include a digital baseband interface to communicate with the RF circuitry 906.

In some dual-mode embodiments, a separate radio IC circuitry may be provided for processing signals for each spectrum, although the scope of the embodiments is not limited in this respect.

In some embodiments, the synthesizer circuitry 906d may be a fractional-N synthesizer or a fractional N/N+1 synthesizer, although the scope of the embodiments is not limited in this respect, as other types of frequency synthesizers may be suitable. For example, the synthesizer circuitry 906d may be a delta-sigma synthesizer, a frequency multiplier, or a synthesizer comprising a phase-locked loop with a frequency divider.

The synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+1 synthesizer.

In some embodiments, frequency input may be provided by a voltage-controlled oscillator (VCO), although that is not a requirement. Divider control input may be provided by either the baseband circuitry 904 or the application circuitry 902 depending on the desired output frequency. In some embodiments, a divider control input (e.g., N) may be determined from a look-up table based on a channel indicated by the application circuitry 902.

The synthesizer circuitry 906d of the RF circuitry 906 may include a divider, a delay-locked loop (DLL), a multiplexer, and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable delay elements, a phase detector, a charge pump, and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

The FEM circuitry 908 may include a receive signal path which may include circuitry configured to operate on RF signals received from the one or more antennas 910, amplify the received signals, and provide the amplified versions of the received signals to the RF circuitry 906 for further processing. The FEM circuitry 908 may also include a transmit signal path which may include circuitry configured to amplify signals for transmission provided by the RF circuitry 906 for transmission by one or more of the one or more antennas 910.

In some embodiments, the FEM circuitry 908 may include a TX/RX switch to switch between transmit mode and receive mode operation. The FEM circuitry 908 may include a receive signal path and a transmit signal path. The receive signal path of the FEM circuitry 908 may include a low-noise amplifier (LNA) to amplify received RF signals and provide the amplified received RF signals as an output (e.g., to the RF circuitry 906). The transmit signal path of the FEM circuitry 908 may include a power amplifier (PA) to amplify input RF signals (e.g., provided by the RF circuitry 906), and one or more filters to generate RF signals for subsequent transmission (e.g., by one or more of the one or more antennas 910).

In some embodiments, the UE 900 comprises a plurality of power-saving mechanisms. If the UE 900 is in an RRC_Connected state, where it is still connected to the eNB as it expects to receive traffic shortly, then it may enter a state known as Discontinuous Reception Mode (DRX) after a period of inactivity. During this state, the UE 900 may power down for brief intervals of time and thus save power.

If there is no data traffic activity for an extended period of time, then the UE 900 may transition to an RRC_Idle state, where it disconnects from the network and does not perform operations such as channel quality feedback, handover, etc. The UE 900 goes into a very low-power state and performs paging, wherein it periodically wakes up to listen to the network and then powers down again. The UE 900 cannot receive data in this state, and in order to receive data, it transitions back to the RRC_Connected state.

An additional power-saving mode may allow a device to be unavailable to the network for periods longer than a paging interval (ranging from seconds to a few hours). During this time, the device is totally unreachable to the network and may power down completely. Any data sent during this time incurs a large delay, and it is assumed that the delay is acceptable.

The embodiments described above can be implemented in one or a combination of hardware, firmware, and software. Various methods or techniques, or certain aspects or portions thereof, can take the form of program code (i.e., instructions) embodied in tangible media, such as flash memory, hard drives, portable storage devices, read-only memory (ROM), RAM, semiconductor memory devices (e.g., EPROM, Electrically Erasable Programmable Read-Only Memory (EEPROM)), magnetic disk storage media, optical storage media, and any other machine-readable storage medium or storage device wherein, when the program code is loaded into and executed by a machine, such as a computer or networking device, the machine becomes an apparatus for practicing the various techniques.

It should be understood that the functional units or capabilities described in this specification may have been referred to or labeled as components or modules in order to more particularly emphasize their implementation independence. For example, a component or module can be implemented as a hardware circuit comprising custom very-large-scale integration (VLSI) circuits or gate arrays, off-the-shelf semiconductors such as logic chips, transistors, or other discrete components. A component or module can also be implemented in programmable hardware devices such as field-programmable gate arrays, programmable array logic, programmable logic devices, or the like. Components or modules can also be implemented in software for execution by various types of processors. An identified component or module of executable code can, for instance, comprise one or more physical or logical blocks of computer instructions, which can, for instance, be organized as an object, procedure, or function. Nevertheless, the executables of an identified component or module need not be physically located together, but can comprise disparate instructions stored in different locations which, when joined logically together, comprise the component or module and achieve the stated purpose for the component or module.

Indeed, a component or module of executable code can be a single instruction, or many instructions, and can even be distributed over several different code segments, among different programs, and across several memory devices. Similarly, operational data can be identified and illustrated herein within components or modules, and can be embodied in any suitable form and organized within any suitable type of data structure. The operational data can be collected as a single data set, or can be distributed over different locations including over different storage devices, and can exist, at least partially, merely as electronic signals on a system or network. The components or modules can be passive or active, including agents operable to perform desired functions.

## Claims

1. An apparatus of a user equipment, UE, (101) for long term evolution, LTE, Multefire, MF, communications on one or more unlicensed channels, the apparatus comprising:
a memory configured to store a first MF identifier, MF-ID; and
processing circuitry coupled to the memory and configured to:
initiate establishment of a first radio resource control, RRC, connection with a first MF evolved node B, eNB, (150) associated with the first MF-ID using the one or more unlicensed channels (180, 185);
identify a radio link failure associated with the first RRC connection using the one or more unlicensed channels;
perform a cell selection in response to the radio link failure to select a second MF eNB; and
initiate transmission of an RRC communication to the second MF eNB in response to the radio link failure using the one or more unlicensed channels, wherein the RRC communication includes an RRC connection reestablishment request, wherein the RRC connection reestablishment request includes the first MF-ID; and
receive an RRC connection reestablishment rejection message from the second MF eNB, wherein the RRC connection reestablishment rejection message is based on the first MF-ID from the RRC reestablishment request.

2. The apparatus of claim 1 wherein the processing circuitry is further configured to process a second MF-ID associated with the second MF eNB as part of the cell selection; and
wherein the first MF-ID is associated with a first MF network; and
wherein the second MF-ID is associated with the first MF network.

3. The apparatus of claim 2 wherein the first MF eNB is associated with a first MF radio area network (RAN);
wherein the second MF eNB is associated with a second MF RAN different from the first MF RAN; and
wherein the first MF RAN is connected with the second MF RAN via an X2 connection.

4. The apparatus of claim 2 wherein the first MF eNB is associated with a first MF radio area network (RAN);
wherein the second MF eNB is associated with a second MF RAN different from the first MF RAN; and
wherein the first MF RAN is connected with the second MF RAN via an SI connection.

5. The apparatus of claims 1-4 wherein the processing circuitry is further configured to:
establish a second RRC connection based on transmission of the RRC communication to the second MF eNB;
identify a second radio link failure associated with a second RRC connection different from the first RRC connection;
process one or more second MF-IDs as part of a second cell selection in response to the second radio link failure; and
determine a failure to identify a network associated with the UE based on processing the one or more second MF-IDs.

6. The apparatus of claim 5 wherein the processing circuitry is further configured to establish a new RRC connection with an unidentified MF eNB associated with the one or more second MF-IDs to perform core network (CN) level recovery following the failure to identify a network associated with the UE.

7. The apparatus of claim 1 wherein the processing circuitry is further configured to process a second MF-ID associated with the second MF eNB as part of the cell selection;
wherein the first MF-ID is associated with a first MF network; and
wherein the second MF-ID is associated with a second MF network different from the first MF network.

8. The apparatus of claim 7 wherein the processing circuitry is further configured to:
process one or more MF-IDs comprising the second MF-ID as part of the cell selection; and
determine a failure to identify a new MF-ID of the one or more MF-IDs associated with the first MF-ID as part of the cell selection;
wherein the RRC connection establishment request is initiated in response to the failure to identify a new MF-ID associated with the first MF-ID.

9. The apparatus of claim 7
wherein the RRC reestablishment request further comprises a first physical cell identifier, PCI-ID, different from the first MF-ID;.

10. The apparatus of claims 1-6 further comprising:
an antenna (708) coupled to the processing circuitry via radio frequency front-end circuitry, wherein the antenna is configured to transmit the RRC communication to the second MF eNB; and
wherein the processing circuitry comprises baseband circuitry of the UE (101).

11. A computer-readable medium comprising instructions that, when executed by one or more processors, configure a user equipment, UE, (101) for long term evolution, LTE, Multefire, MF, communications in unlicensed spectrum independent from licensed communications, the instructions to configure the one or more processors to:
initiate establishment of a radio resource control, RRC, connection on an unlicensed channel with a first MF evolved node B, eNB, (150) associated with a first Multefire, MF, identifier, MF-ID;
identify a radio link failure associated with the first RRC connection;
process a second MF-ID associated with a second MF eNB as part of a cell selection in response to the radio link failure; and
initiate transmission of an RRC communication to the second MF eNB in response to the radio link failure, wherein the RRC communication includes an RRC connection reestablishment request, wherein the RRC connection reestablishment request includes the first MF-ID; and
receive an RRC connection reestablishment rejection message from the second MF eNB, wherein the RRC connection reestablishment rejection message is based on the first MF-ID from the RRC reestablishment request.

12. The medium of claim 11 wherein the instructions further configure the one or more processors to determine that the first MF-ID and the second MF-ID are associated with a first network operator; and
wherein the RRC communication is initiated as an RRC reconnection request in response to the determination that the first MF-ID and the second MF-ID are associated with the first network operator.

13. The medium of claim 11 wherein the instructions further configure the one or more processors to determine that the second MF-ID is not associated with a first network operator associated with the first MF-ID; and
wherein the RRC communication is initiated as an RRC connection request in response to the determination that the second MF-ID is not associated with the first network operator and the first MF- ID.

14. An apparatus of a Multefire, MF, evolved node B, MF eNB, (150) for long term evolution, LTE, MF communications using one or more unlicensed channels, the apparatus comprising:
a memory, wherein the memory is configured to store a set of one or more first MF identifiers, MF-IDs, associated with an operator of the MF eNB; and
processing circuitry coupled to the memory and configured to:
process, from a first user equipment, UE, a radio resource control, RRC connection reestablishment request;
identify, from the RRC connection reestablishment request, a second MF-ID associated with a previous RRC connection of the first UE;
initiate a response to the RRC connection reestablishment request based on
the set of
one or more first MF-IDs and the second MF-ID;
process the second MF-ID to determine that the set of one or more first MF-IDs does not include the second MF-ID; and
in response to the determination that the set of one or more first MF-IDs does not include the second MF-ID, generate the response to the RRC connection reestablishment request as an RRC connection reestablishment rejection message.

## Patentansprüche

1. Vorrichtung eines Benutzergeräts, UE, (101) für Long Term Evolution, LTE, Multefire, MF, Kommunikation auf einem oder mehreren nicht lizenzierten Kanälen, wobei die Vorrichtung umfasst:
einen Speicher, konfiguriert zum Speichern einer ersten MF-Kennung, MF-ID; und
Verarbeitungsschaltung, die mit dem Speicher gekoppelt und konfiguriert ist zum:
Initiieren von Herstellung einer ersten Radio Resource Control, RRC, Verbindung mit einem ersten MF Evolved Node B, eNB, (150) der mit der ersten MF-ID verknüpft ist unter Verwenden des einen oder der mehreren nicht lizensierter Kanäle (180, 185);
Identifizieren eines Funkverbindungsfehlschlags, der mit der ersten RRC-Verbindung verknüpft ist, unter Verwenden der einen oder der mehreren nicht lizensierten Kanäle;
Durchführen einer Zellenauswahl als Reaktion auf den Funkverbindungsfehlschlag, um einen zweiten MF eNB auszuwählen; und
Initiieren von Übertragung einer RRC-Kommunikation an den zweiten MF eNB als Reaktion auf den Funkverbindungsfehlschlag unter Verwenden des einen oder der mehreren nicht lizensierten Kanäle, wobei die RRC-Kommunikation eine RRC-Verbindungswiederherstellungs-Anfrage beinhaltet, wobei die RRC-Verbindungswiederherstellungs-Anfrage die erste MF-ID beinhaltet; und
Empfangen einer RRC-Verbindungswiederherstellungs-Ablehnungsnachricht von dem zweiten MF eNB, wobei die RRC-Verbindungswiederherstellung-Ablehnungsnachricht auf der ersten MF-ID aus der RRC-Wiederherstellungs-Anfrage basiert.

2. Vorrichtung nach Anspruch 1, wobei die Verarbeitungsschaltung ferner konfiguriert ist, um eine zweite MF-ID, die mit dem zweiten MF eNB verknüpft ist, als Teil der Zellenauswahl zu verarbeiten; und
wobei die erste MF-ID mit einem ersten MF-Netzwerk verknüpft ist; und
wobei die zweite MF-ID mit dem ersten MF-Netzwerk verknüpft ist.

3. Vorrichtung nach Anspruch 2, wobei der erste MF-eNB mit einem ersten MF Radio Area Network (RAN) verknüpft ist;
wobei der zweite MF eNB mit einem zweiten MF RAN verknüpft ist, das sich von dem ersten MF RAN unterscheidet; und
wobei das erste MF RAN mit dem zweiten MF RAN über eine X2
Verbindung verbunden ist.

4. Vorrichtung nach Anspruch 2, wobei der erste MF eNB mit einem ersten MF Radio Area Network (RAN) verknüpft ist;
wobei der zweite MF eNB mit einem zweiten MF RAN verknüpft ist, das sich von dem ersten MF RAN unterscheidet; und
wobei das erste MF RAN mit dem zweiten MF RAN über eine SI-Verbindung verbunden ist.

5. Vorrichtung nach den Ansprüchen 1-4, wobei die Verarbeitungsschaltung ferner konfiguriert ist zum:
Herstellen einer zweiten RRC-Verbindung basierend auf der Übertragung der RRC-Kommunikation an den zweiten MF eNB ;
Identifizieren eines zweiten Funkverbindungfehlschlags, der mit einer zweiten RRC-Verbindung verknüpft ist, die sich von der ersten RRC-Verbindung unterscheidet;
Verarbeiten einer oder mehrerer zweiter MF-IDs als Teil einer zweiten Zellenauswahl als Reaktion auf den zweiten Funkverbindungsfehlschlag; und
Bestimmen eines Identifizierungsfehlschlags eines Netzwerks, das mit dem UE verknüpft ist, basierend auf der Verarbeitung der einen oder den mehreren zweiten MF-IDs.

6. Vorrichtung nach Anspruch 5, wobei die Verarbeitungsschaltung ferner konfiguriert ist zum Herstellen einer neuen RRC-Verbindung mit einem nicht identifizierten MF eNB, der mit der einen oder den mehreren zweiten MF-IDs verknüpft ist, um eine Wiederherstellung auf Kernnetzwerkebene (CN) nach dem Fehlschlag, ein mit dem UE verbundenes Netzwerk zu identifizieren, durchzuführen.

7. Vorrichtung nach Anspruch 1, wobei die Verarbeitungsschaltung ferner konfiguriert ist zum Verarbeiten einer zweiten MF-ID, die mit dem zweiten MF eNB verknüpft ist, als Teil der Zellenauswahl;
wobei die erste MF-ID mit einem ersten MF Netzwerk verknüpft ist; und
wobei die zweite MF-ID mit einem zweiten MF Netzwerk verknüpft ist, das sich von dem ersten MF Netzwerk unterscheidet.

8. Vorrichtung nach Anspruch 7, wobei die Verarbeitungsschaltung ferner konfiguriert ist zum:
Verarbeiten einer oder mehrerer MF-IDs, die die zweite MF-ID umfassen, als Teil der Zellenauswahl; und
Bestimmen eines Identifizierungsfehlschlags einer neuen MF-ID der einen oder mehreren MF-IDs, die mit der ersten MF-ID verknüpft sind, als Teil der Zellenauswahl;
wobei die RRC-Verbindungsherstellungsanfrage als Antwort auf den Identifizierungsfehlschlag einer neuen MF-ID, die mit der ersten MF-ID verknüpft ist, initiiert wird.

9. Vorrichtung nach Anspruch 7, wobei die RRC-Wiederherstellungs-Anfrage ferner eine erste physikalische Zellenkennung, PCI-ID, umfasst, die sich von der ersten MF-ID unterscheidet.

10. Vorrichtung nach den Ansprüchen 1-6 ferner umfassend:
eine Antenne (708), die über eine Funkfrequenz-Front-End-Schaltung an die Verarbeitungsschaltung gekoppelt ist, wobei die Antenne konfiguriert ist, um die RRC-Kommunikation an den zweiten MF eNB zu übertragen; und
wobei die Verarbeitungsschaltung eine Basisbandschaltung des UE (101) umfasst.

11. Computerlesbares Medium, das Anweisungen umfasst, die, wenn sie von einem oder mehreren Prozessoren ausgeführt werden, ein Benutzergerät, UE, (101) für Long Term Evolution, LTE, Multefire, MF, Kommunikationen in nicht lizenziertem Spektrum unabhängig von lizenzierten Kommunikationen konfigurieren, wobei die Anweisungen den einen oder die mehreren Prozessoren konfigurieren zum:
Initiieren von Herstellung einer Radio Resource Control, RRC, Verbindung auf einem nicht lizensierten Kanal mit einer ersten MF Evolved Node B, eNB, (150), Verbindung, die mit einer ersten Multefire, MF, Kennung, MF-ID, verknüpft;
Identifizieren eines Funkverbindungsfehlschlags, der mit der ersten RRC-Verbindung verknüpft ist;
Verarbeiten einer zweiten MF-ID, die mit einem zweiten MF-eNB verknüpft ist, als Teil einer Zellenauswahl als Reaktion auf den Funkverbindungsfehlschlag; und
Initiieren von Übertragung einer RRC-Kommunikation an den zweiten MF eNB als Reaktion auf den Funkverbindungsfehlschlag, wobei die RRC-Kommunikation eine RRC-Verbindungswiederherstellungs-Anfrage beinhaltet, wobei die RRC-Verbindungswiederherstellungs-Anfrage die erste MF-ID beinhaltet; und
Empfangen einer RRC-Verbindungswiederherstellungs-Ablehnungsnachricht von dem zweiten MF eNB, wobei die RRC-Verbindungswiederherstellungs-Ablehnungsnachricht auf der ersten MF-ID aus der RRC-Verbindungswiederherstellungs-Anfrage basiert.

12. Medium nach Anspruch 11, wobei die Anweisungen ferner den einen oder die mehreren Prozessoren konfigurieren zum Bestimmen, dass die erste MF-ID und die zweite MF-ID mit einem ersten Netzwerk Operator verknüpft sind; und
wobei die RRC-Kommunikation als Antwort auf das Bestimmen, dass die erste MF-ID und die zweite MF-ID mit dem ersten Netzwerk Operator verknüpft sind, als eine RRC-Verbindungswiederherstellungs-Anfrage initiiert wird.

13. Medium nach Anspruch 11, wobei die Anweisungen ferner den einen oder die mehreren Prozessoren konfigurieren zum Bestimmen, dass die zweite MF-ID nicht mit einem ersten Netzwerk Operator verknüpft ist, der mit der ersten MF-ID verknüpft ist; und
wobei die RRC-Kommunikation als Antwort auf das Bestimmen, dass die zweite MF-ID nicht mit dem ersten Netzwerk Operator und der ersten MF-ID verknüpft ist, als eine RRC-Verbindungs-Anfrage initiiert wird.

14. Vorrichtung eines Multefire, MF, Evolved Node B, MF eNB, (150) für Long Term Evolution, LTE, MF-Kommunikationen unter Verwenden eines oder mehrerer nicht lizensierter Kanäle, wobei die Vorrichtung umfasst:
einen Speicher, wobei der Speicher konfiguriert ist, um einen Satz von einer oder mehreren ersten MF-Kennungen, MF-IDs, zu speichern, die mit einem Operator des MF eNB verknüpft sind; und
Verarbeitungsschaltung, die mit dem Speicher gekoppelt und konfiguriert ist zum:
Verarbeiten, von einem ersten Benutzergerät, UE, einer Radio Resource Control-, RRC-, Verbindungswiederherstellungs-Anfrage
Identifizieren, aus der RRC-Verbindungswiederherstellungs-Anfrage, einer zweite MF-ID, die mit einer früheren RRC-Verbindung des ersten UE verknüpft ist;
Initiieren einer Antwort auf die RRC-Verbindungswiederherstellungs-Anfrage basierend auf dem Satz einer oder mehrerer ersten MF-IDs und der zweiten MF-ID;
Verarbeiten der zweiten MF-ID, um zu bestimmen, dass der Satz von einer oder mehreren ersten MF-IDs die zweite MF-ID nicht beinhaltet; und
als Antwort auf das Bestimmen, dass der Satz von einer oder mehreren ersten MF-IDs die zweite MF-ID nicht beinhaltet, Erzeugen der Antwort auf die RRC-Verbindungswiederherstellungs-Anfrage als eine RRC-Verbindungswiederherstellungs-Ablehnungsnachricht.

## Revendications

1. Un appareil d'un équipement utilisateur, UE, (101) pour des communications Multefire, MF, en Évolution à long terme, LTE, sur un ou plusieurs canaux sans licence, l'appareil comprenant :
une mémoire configurée pour stocker un premier identifiant MF, MF-ID ; et
une circuiterie de traitement couplée à la mémoire et configurée pour :
engager l'établissement d'une première connexion de contrôle de ressource radio, RRC, avec un premier nœud B évolué, eNB, (150) MF associé au premier MF-ID en utilisant les un ou plusieurs canaux sans licence (180, 185) ;
identifier un échec de liaison radio associé à la première connexion RRC en utilisant les un ou plusieurs canaux sans licence ;
réaliser une sélection de cellule en réponse à l'échec de liaison radio pour sélectionner un deuxième eNB MF ;
engager la transmission d'une communication RRC au deuxième eNB MF en réponse à l'échec de liaison radio en utilisant les un ou plusieurs canaux sans licence, dans lequel la communication RRC inclut une requête de rétablissement de connexion RRC, dans lequel la requête de rétablissement de connexion RRC inclut le premier MF-ID ; et
recevoir du deuxième eNB MF un message de rejet de rétablissement de connexion RRC, dans lequel le message de rejet de rétablissement de connexion RRC est basé sur le premier MF-ID de la requête de rétablissement RRC.

2. L'appareil selon la revendication 1 dans lequel la circuiterie de traitement est en outre configurée pour traiter un deuxième MF-ID associé au deuxième eNB MF dans le cadre de la sélection de cellule ; et
dans lequel le premier MF-ID est associé à un premier réseau MF ; et
dans lequel le deuxième MF-ID est associé au premier réseau MF.

3. L'appareil selon la revendication 2 dans lequel le premier eNB MF est associé à un premier réseau de zone radio MF (RAN) ;
dans lequel le deuxième eNB MF est associé à un deuxième RAN MF différent du premier RAN MF ; et
dans lequel le premier RAN MF est connecté au deuxième RAN MF via une connexion X2.

4. L'appareil selon la revendication 2 dans lequel le premier eNB MF est associé à un premier réseau de zone radio MF (RAN) ;
dans lequel le deuxième eNB MF est associé à un deuxième RAN MF différent du premier RAN MF ; et
dans lequel le premier RAN MF est connecté au deuxième RAN MF via une connexion SI.

5. L'appareil selon les revendications 1 à 4 dans lequel la circuiterie de traitement est en outre configurée pour :
établir une deuxième connexion RRC, sur la base de la transmission de la communication RRC au deuxième eNB MF ;
identifier un deuxième échec de liaison radio associé à une deuxième connexion RRC différente de la première connexion RRC ;
traiter un ou plusieurs deuxièmes MF-ID dans le cadre d'une deuxième sélection de cellule en réponse au deuxième échec de liaison radio ; et
déterminer un échec de l'identification d'un réseau associé à l'UE sur la base du traitement des un ou plusieurs deuxièmes MF-ID.

6. L'appareil selon la revendication 5 dans lequel la circuiterie de traitement est en outre configurée pour établir une nouvelle connexion RRC avec un eNB MF non identifié associé aux un ou plusieurs deuxièmes MF-ID pour réaliser une récupération au niveau réseau de cœur (CN) suite à l'échec de l'identification d'un réseau associé à l'UE.

7. L'appareil selon la revendication 1 dans lequel la circuiterie de traitement est en outre configurée pour traiter un deuxième MF-ID associé au deuxième eNB MF dans le cadre de la sélection de cellule ;
dans lequel le premier MF-ID est associé à un premier réseau MF ; et
dans lequel le deuxième MF-ID est associé à un deuxième réseau MF différent du premier réseau MF.

8. L'appareil selon la revendication 7 dans lequel la circuiterie de traitement est en outre configurée pour :
traiter un ou plusieurs MF-ID comprenant le deuxième MF-ID dans le cadre de la sélection de cellule ; et
déterminer un échec de l'identification d'un nouveau MF-ID des un ou plusieurs MF-ID associés au premier MF-ID dans le cadre de la sélection de cellule ;
dans lequel la requête d'établissement de connexion RRC est engagée en réponse à l'échec de l'identification d'un nouveau MF-ID associé au premier MF-ID.

9. L'appareil selon la revendication 7 dans lequel la requête de rétablissement RRC comprend en outre un premier identifiant de cellule physique, PCI-ID, différent du premier MF-ID.

10. L'appareil selon les revendications 1 à 6 comprenant en outre :
une antenne (708) couplée à la circuiterie de traitement via une circuiterie radiofréquence frontale, dans lequel l'antenne est configurée pour transmettre la communication RRC au deuxième eNB MF ; et
dans lequel la circuiterie de traitement comprend une circuiterie de bande de base de l'UE (101).

11. Un support lisible par ordinateur comprenant des instructions qui, lorsqu'elles sont exécutées par un ou plusieurs processeurs, configurent un équipement utilisateur, UE, (101) pour des communications Multefire, MF, Évolution à long terme, LTE, dans un spectre sans licence indépendant des communications sous licence, les instructions devant configurer les un ou plusieurs processeurs pour :
engager l'établissement d'une connexion de contrôle de ressource radio, RRC, sur un canal sans licence avec un premier nœud B évolué, eNB, (150) MF associé à un premier identifiant Multefire, MF, MF-ID ;
identifier un échec de liaison radio associé à la première connexion RRC ;
traiter un deuxième MF-ID associé à un deuxième eNB MF dans le cadre d'une sélection de cellule en réponse à l'échec de liaison radio ; et
engager la transmission d'une communication RRC au deuxième eNB MF en réponse à l'échec de liaison radio, dans lequel la communication RRC inclut une requête de rétablissement de connexion RRC, dans lequel la requête de rétablissement de connexion RRC inclut le premier MF-ID ; et
recevoir du deuxième eNB MF un message de rejet de rétablissement de connexion RRC, dans lequel le message de rejet de rétablissement de connexion RRC est basé sur le premier MF-ID de la requête de rétablissement RRC.

12. Le support selon la revendication 11 dans lequel les instructions configurent en outre les un ou plusieurs processeurs pour déterminer que le premier MF-ID et le deuxième MF-ID sont associés à un premier opérateur de réseau ; et
dans lequel la communication RRC est engagée sous la forme d'une requête de reconnexion RRC en réponse à la détermination que le premier MF-ID et le deuxième MF-ID sont associés au premier opérateur de réseau.

13. Le support selon la revendication 11 dans lequel les instructions configurent en outre les un ou plusieurs processeurs pour déterminer que le deuxième MF-ID n'est pas associé à un premier opérateur de réseau associé au premier MF-ID ; et
dans lequel la communication RRC est engagée sous la forme d'une requête de connexion RRC en réponse à la détermination que le deuxième MF-ID n'est pas associé au premier opérateur de réseau et au premier MF-ID.

14. Un appareil d'un nœud B évolué, eNB MF, Multefire, MF, (150) pour des communications MF Évolution à long terme, LTE, en utilisant un ou plusieurs canaux sans licence, l'appareil comprenant :
une mémoire, dans lequel la mémoire est configurée pour stocker un jeu d'un ou plusieurs premiers identifiants MF, MF-ID, associés à un opérateur du eNB MF ; et
une circuiterie de traitement couplée à la mémoire et configurée pour :
traiter, à partir d'un premier équipement utilisateur, UE, une requête de rétablissement de connexion, RRC, de contrôle de ressource radio ;
identifier, à partir de la requête de rétablissement de connexion RRC, un deuxième MF-ID associé à une connexion RRC antérieure du premier UE ;
engager une réponse à la requête de rétablissement de connexion RRC sur la base du jeu d'un ou plusieurs premiers MF-ID et du deuxième MF-ID ;
traiter le deuxième MF-ID pour déterminer que le jeu d'un ou plusieurs premiers MF-ID n'inclut pas le deuxième MF-ID ; et
en réponse à la détermination que le jeu d'un ou plusieurs premiers MF-ID n'inclut pas le deuxième MF-ID, générer la réponse à la requête de rétablissement de connexion RRC sous la forme d'un message de rejet de rétablissement de connexion RRC.
